(19) Europäisches Patentamt
European Patent Office
Office européen des brevets

(11) Publication number : 0 546 757 A1

# (12) EUROPEAN PATENT APPLICATION

(21) Application number : 92310959.9

(22) Date of filing : 01.12.92

(51) Int. Cl.$^5$ : C08L 71/12, C08L 83/04, C08L 83/10

(30) Priority : 09.12.91 US 803813

(43) Date of publication of application : 16.06.93 Bulletin 93/24

(84) Designated Contracting States : DE ES FR GB IT NL

(71) Applicant : GENERAL ELECTRIC COMPANY
1 River Road
Schenectady, NY 12345 (US)

(72) Inventor : Mitchell, Linda Lee
88 Union Avenue
Delmar, New York 12054 (US)
Inventor : Hellstern-Burnell, Ann Marie
8 Reisling Road
Schenectady, New York 12309 (US)

(74) Representative : Pratt, Richard Wilson et al
London Patent Operation G.E. Technical Services Co. Inc. Essex House 12/13 Essex Street
London WC2R 3AA (GB)

## (54) Controlling specular surface gloss of molded blends of polyphenylene ether and silicone-organic impact modifiers.

(57) A method is provided for controlling the surface gloss of molded blends of polyphenylene ether and organopolysiloxane/organic polymeric impact modifier. It has been found that prior to isolating the organopolysiloxane/organic polymeric latex from an aqueous organosilicon monomer and vinyl containing organic monomer polymerization mixture, if the latex is neutralized within a pH range of between about 1 to about 10, that blends of the impact modifier and polyphenylene ether can be molded into parts having a high specular surface gloss or low specular surface gloss depending upon the particular range of pH selected.

EP 0 546 757 A1

## Cross Reference to Related Application

Reference is made to copending application, serial number 07/614,802, filed November 15, 1990 for Method and Organopolysiloxane/Organic Polymeric Compositions Obtained Therefrom.

## Background of the Invention

The present invention relates to a method for making silicone-organic impact modifiers useful for melt blending with polyphenylene ether to produce blends capable of exhibiting a predictable specular surface gloss when molded into a specific shape. More particularly, the present invention relates to a method of making silicone/organic impact modifier by the substantial concurrent polymerization in an aqueous medium of organo silicon monomer and vinyl containing organic monomer where a particular pH range is used to neutralize the impact modifier prior to its isolation from the mixture.

Prior to the present invention, as shown by European patent application 0246537A2, polymeric material consisting of a core of silicone rubber surrounded by at least two chemically different shells, is used as thermoplastic molding compounds. Hilliard, U.S. Patent 3,898,300 is directed to a method for making polymeric styrene-acrylonitrile polyorganosiloxane compositions by polymerizing various vinyl monomers in the presence of an emulsion of a prepolymerized vinylsiloxane-dimethylsiloxane copolymer. European patent application 0350240 is directed to a semi-continuous method for making various compositions such as coating compositions in the form of aqueous emulsion copolymers with siloxane functionality. A critical feature of application 0350240 is that a mixture of reactive monomers, such as an ethylenically unsaturated monomer, for example, styrene, a free radical polymerizable reactive silane, such as methyl-acryloxypropyltrimethoxy silane (MATS) and a linear polysiloxane precursor, or octamethylcyclotetrasiloxane ($D_4$) is added to a solution of a polymerization initiator. In addition, the ethylenically unsaturated monomer is 70% or more of the monomer mixture and latexes having particle sizes of from about 50 to 100 nm can be prepared by this semi-continuous technique. In European patent application 0166900, there is shown a polyorganosiloxane-based graft copolymer produced by graft-polymerizing at least 1 vinyl monomer on a polyorganosiloxane. There is further described in European patent application 0249964, the grafting of a copolymer of a vinyl monomer onto a polyorganosiloxane rubber and the use of the resulting graft copolymer in a polycarbonate resin to improve the stability and impact resistance of the polycarbonate resin.

Additional silicone graft copolymers are shown in copending applications serial nos. 271,250 and 271,248, filed Nov. 14, 1988 involving the employment of multistage polyorganosiloxane/polyvinyl-based graft polymer compositions comprising as a first stage, a cohomopolymerized substrate of silicone monomers and vinyl monomers, and at least one subsequent stage graft polymerized in the presence of the first stage latex.

Organic polymeric compositions in the form of multilobed structures are shown in EP0369203-A2 and J. Polymer Sci. Part A: Polymer Chemistry Vol. 28, 629-651 (1990). These multilobed structures are based on a multi-stage polymerization.

Although some of the aforementioned procedures provide various silicone/organic polymeric materials useful in various applications, such as coatings and impact modifiers for organic thermoplastic polymers, additional materials useful in particular applications resulting from the polymerization of silicone monomers and vinyl organic monomers are constantly being sought. Of particular interest are impact modifiers to further enhance the impact properties of a variety of organic thermoplastic polymers, such as aromatic polyphenylene ethers; blends of polyphenylene ethers with vinyl aromatic polymers such as polystyrene; thermoplastic aromatic polyesters; thermoplastic aromatic polycarbonates; thermoplastic aromatic poly(etherimides); and blends of thermoplastic aromatic polycarbonates and thermoplastic aromatic polyesters, poly(vinylic) resins, polysulfone, polyetherimide ester and polyether sulfone.

## Summary of the Invention

The present invention is based on the discovery that multilobe organopolysiloxane-organic polymeric compositions useful as impact modifiers for a variety of organic thermoplastic polymers as described in copending application serial no. 07/614,802, can be melt blended with polyphenylene ether and thereafter molded to produce molded parts having a predictable specular surface gloss. It has been found, for example, that specular surface gloss of molded parts resulting from melt extruded blends of polyphenylene ether and organopolysiloxane-organic polymeric impact modifiers increases as the pH of the latex from which the impact modifier is isolated, is raised from the reaction pH of 1 to a pH of 7.5-10. Micrographs of the morphology of molded parts shows that for a given polymer composition, impact modifier, maintained at pH of about 1 prior to isolation has increased agglomeration at the surface of the molded part relative to material adjusted to a higher pH, such

as a pH of 7.5.

The formation of larger rubber domains results in increased surface roughness which leads to a decrease in specular gloss. Specular gloss, as used hereinafter, is based on specular reflectance, where gloss (G) is related to root mean surface roughness ($\sigma$) by the following relationship:

$$G \sim e - 4\pi\sigma\cos\o/\lambda$$

where ø the angle of reflectance of and $\lambda$ is the wavelength of the incident light. It has been found that the lowest gloss can be achieved when the ratio of polyorganosiloxane/vinyl polymer in the impact modifier is in the order of 65/35. In addition, the range where the agglomerated rubber domain size is largest occurs when the polymeric material is isolated at about pH 1. Accordingly, the highest gloss can be achieved when the ratio is approximately 35/65 and the latex is neutralized to pH 7.5-10 before isolation.

## Statement of the Invention

There is provided by the present invention a method for controlling the specular surface gloss of molded blends of polyphenylene ether and polysiloxane/organic impact modifier which comprises,

(1) forming a latex from the substantially concurrent polymerization of 43 to 400 parts by weight of organo silicon monomer, per 150 parts by weight of vinyl containing organic monomer in an aqueous emulsified mixture of such monomers,

(2) neutralizing the latex of (1) prior to its isolation over a pH range of 1 to 10,

(3) isolating the latex of (2) to provide an organopolysiloxane/organic polymeric material,

(4) melt blending the organopolysiloxane/organic polymeric material of (3) with polyphenylene ether,

(5) molding the blend of (4) to provide molded parts having a 60 degree surface gloss of from about 20 to 85 when the pH range of (2) is between 1 to 5 and a 60 degree surface gloss of from about 60 to 100 when the pH is in the range of 5 to 10.

Organopolysiloxanes which can be formed during the polymerization reaction of the mixture of organosilicon monomers used in the practice of the invention, can contain condensed units of the general formula,

$$R_2SiO,\ RSiO_{1.5},\ R_3SiO_{.5} \text{ and } SiO_2,$$

where R is a $C_{(1-18)}$ monovalent organic radical, and preferably a monovalent hydrocarbon radical having 11 to 13 carbon atoms, or a substituted $C_{(1-13)}$ hydrocarbon radical, and R is most preferably methyl or phenyl. A limited number of R radicals also can be vinyl, mercaptoalkyl and/or allyl to facilitate grafting between the vinyl organic lobe and the siloxane appendage. Particularly preferred for facilitating grafting, are R radicals containing vinyl, acryl and/or methacryl radicals.

The preferred organosilicon monomers which can be used in the practice of the invention are included within the formula $R_n\text{-}Si(OR^1)_{4-n}$ where R is as previously defined, n is 0, 1, 2, or 3, and each $R^1$ represents hydrogen or a $C_{(1-13)}$ monovalent hydrocarbon radical selected from alkyl, and aryl, and preferably methyl, ethyl, isopropyl, and phenyl. $R^1$ in particular instances also can be

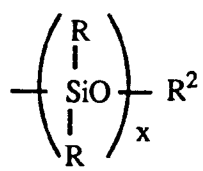 ,

where R is as previously defined, and when n is 2 or 3, x is preferably an integer equal to 1-10 inclusive, and $R^2$ is hydrogen or a $C_{(1-13)}$ monovalent hydrocarbon radical selected from $C_{(1-8)}$ alkyl such as methyl or $C_{(6-13)}$ aryl such as phenyl. When R is a moiety reactive towards free radical polymerization, then the crosslinker also can act as a graft linker to bind the polyorganosiloxane appendages to the organic polymer based lobe.

In addition to the aforedescribed alkoxy silanes, there can be used in, cyclic siloxanes having from three to about six condensed siloxy units or mixtures of alkoxysilanes and cyclic siloxanes. There are included by the cyclic siloxanes, hexamethylcyclotrisiloxane, octamethylcyclotetrasiloxane, decamethylcyclopentasiloxane, dodecamethylcyclohexasiloxane, octaphenylcyclotetrasiloxane, tetramethyltetraphenyl-cyclotetrasiloxane and tetramethyltetravinyl-cyclotetrasiloxane. These cyclic siloxanes can be used alone or as a mixture.

A preferred crosslinker is tetraethoxy silane. A combination crosslinker and graft linker compound is vinyltriethoxysilane or gamma-methacryloxypropyltrimethoxysilane.

The term vinyl containing organic monomer includes alkenyl aromatic compounds, such as styrene, alpha methylstyrene, vinyltoluene, vinylnapthalene, vinylanthracene and halogenated styrene or its derivative, and mixtures thereof. Other suitable vinyl containing monomers include (meth)acrylic acids and (meth)acrylates

and derivatives thereof, such as methyl, ethyl, allyl or butyl acrylate, methacrylates, such as methyl methacrylate or ethylhexyl methacrylate; vinyl cyanides such as acrylonitrile or methacrylonitrile; olefins such as ethylene or propylene and other vinyl compounds such as vinylimidazole, vinylfuran, ethylene dimethacrylate, vinyl alkyl ether, vinyl acetate, maleic anhydride, N-phenyl (or alkyl) maleimides; N-(or disubstituted) acrylamides and mixtures of any of these monomers.

Crosslinkers also can be present and include di- or tri- substituted derivatives, such as dlvinylbenzene, dialkyl maleate, triallyl cyanurate, dipiperidinoethane, or any of the known divinyl or polyvinyl counterparts of the above recited vinyl monomers.

Surfactants are used to emulsify the reaction mixture. Although the polymerization of the mixture of organosilicon monomers can be effected by the use of standard acid or base catalysts, certain surfactants can be used to effect the polymerization of such organosilicon material in an emulsion system. Accordingly, if desired, a combination of catalysts and surfactants can be used to polymerize the organosilicon monomers such as a combination of anionic, cationic or nonionic surfactants, as well as free acids combined with surfactants. Useful surfactants are shown by U.S. Patents 2,891,920 and 3,294,725 and are incorporated herein by reference. The preferred surfactant is dodecylbenzene sulfonic acid.

Suitable water-soluble initiators for the vinyl containing organic monomer include for example, potassium persulfate, sodium persulfate and ammonium persulfate. Other initiators are organic soluble initiators such as azobisisobutyronitrile (AIBN) and organic peroxides. The initiator can be charged batchwise, though it is preferred that it be charged incrementally or continuously during the polymerization. In addition, free radical initiators based on redox system may also be used. Depending upon choice of initiator, there can be used from 0.1% to 5% by weight of initiator based on the weight of the vinyl monomer mixture for effective results.

In the practice of the present invention, substantially concurrent polymerization of the vinyl containing organic monomer, which hereinafter means one or more vinyl containing organic monomers as previously defined, and the organosilicon monomer, which means alkoxy silane, cyclic siloxane or a mixture thereof, can be carried out by initially homogenizing the reactants in the presence of water and surfactant. The concentration of monomers may be 5 to 50% by weight of the total reactor content, while the surfactant concentration may be 0.17% - 0.75% depending on the weight % monomers chosen.

It is preferred to use a free radical initiator for the polymerization of the vinyl containing organic monomer. Although the order of addition to the homogenized mixture is not critical, it is preferred to add the initiator to the emulsified mixture of monomers. In instances where a surfactant is used which can catalyze the polymerization of the mixture of organosilicon monomers, substantial polymerization of the vinyl containing organic monomer and mixture of organosilicon monomers can be effected at 0° to 110°C, and preferably between 75°C to 90°C depending upon the choice of initiator for the vinyl containing organic monomer. The polymerization of the vinyl containing organic monomer can be monitored by analytical techniques, such as gas chromatography. At the termination of polymerization, the temperature of the mixture can be lowered.

Organopolysiloxane/organic polymeric impact modifiers having a multilobed structure can be isolated by conventional means such as flocculation. However, it has been found that prior to isolating the organopolysiloxane/organic polymeric latex from the aqueous organosilicon monomer and vinyl containing organic monomer polymerization mixture, if the pH is varied in the range of between about 1 to about 10, blends of the impact modifier and polyphenylene ether can be molded into parts having a high specular surface gloss or low specular surface gloss depending upon the range of pH selected. In instances when acid catalyzed polymerization of the organosilicon monomer mixture is used, such as when dodecylbenzenesulfonic acid is employed as both initiator and surfactant, a base can be added to the latex, such as an aqueous solution of sodium hydroxide, potassium hydroxide, sodium carbonate, potassium carbonate, sodium hydrogen carbonate, triethanolamine or triethylamine. The pH may be maintained or may be raised from a level of 1 to 3 to a pH of 6 to 10.

For example an electrolyte solution of 0.5 to 5% of aqueous magnesium sulfate solution may be heated to 75 - 85 °C. The latex can then be added to the agitated salt solution, and the flocculated product isolated by filtration from the aqueous medium. The flocculated materials are recovered in the form of free flowing powders or in the form of loosely agglomerated tacky granules.

The impact modifier can be utilized at from about 1 to about 35 parts by weight of impact modifier per 100 parts by weight of polyphenylene ether to produce thermoplastic blends having controlled specular gloss and improved impact resistance. The specular gloss of molded blends which contain polyphenylene ether and are modified with the organopolysiloxane/organic polymer compositions of this invention can be controlled by the choice of modifier composition at a given pH, the choice of pH at a given modifier composition, or by the choice of particle size for a given pH and modifier composition.

The polyphenylene ethers which can be utilized in the practice of the present invention to make molded blends of polyphenylene ether and siloxane/organic impact modifier include polyphenylene ethers comprising a plurality of structural units having the formula

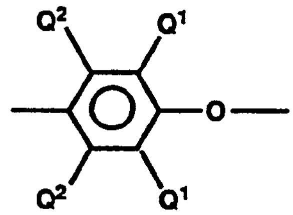

where in each of said units, independently, each $Q^1$ is halogen, primary or secondary lower alkyl (i.e., alkyl containing up to 7 carbon atoms), phenyl, haloalkyl, aminoalkyl, hydrocarbonoxy, or halohydrocarbonoxy wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined for $Q^1$. Examples of suitable primary lower alkyl groups are methyl, ethyl, n-propyl, n-butyl, isobutyl, n-amyl, isoamyl, 2-methylbutyl, n-hexyl, 2,3-dimethylbutyl, 2-, 3- or 4-methylpentyl and the corresponding heptyl groups. Examples of secondary lower alkyl groups are isopropyl, sec-butyl and 3-pentyl. Preferably, any alkyl radicals are straight chain rather than branched. Most often, each $Q^1$ is alkyl or phenyl, especially $C_{1-4}$ alkyl, and each $Q^2$ is hydrogen.

Both homopolymer and copolymer polyphenylene ethers are known. The homopolymers include those containing, for example, 2,6-dimethyl-1,4-phenylene ether units. the copolymers include random copolymers containing such units in combination with (for example) 2,3,6-trimethyl-1, 4-phenylene ether units. Many suitable random copolymers, as well as homopolymers, are disclosed in the patent literature.

Polyphenylene ethers are typically prepared by the oxidative coupling of at least one corresponding monohydroxyaromatic compound. Particularly useful and readily available monohydroxyaromatic compounds are 2,6-xylenol (wherein each $Q^1$ is methyl and each $Q^2$ is hydrogen), whereupon the polymer may be characterized as a poly(2,6-dimethyl-1,4-phenylene ether), and 2,3,6-trimethylphenol (wherein each $Q^1$ and one $Q^2$ is methyl and the other $Q^2$ is hydrogen).

A variety of catalyst systems are known for the preparation of polyphenylene ethers by oxidative coupling. For the most part, they contain at least one heavy metal compound such as copper, manganese or cobalt compound, usually in combination with various other materials.

Other catalyst systems contain manganese compounds. They are generally alkaline systems in which divalent manganese is combined with such anions as halide, alkoxide or phenoxide. Most often, the manganese is present as a complex with one or more complexing and/or chelating agents such as dialkylamines, alkanolamines, alkylenediamines, o-hydroxyaromatic aldehydes, o-hydroxyazo compounds, ω-hydroxyoximes (monomeric and polymeric), o-hydroxyaryl oximes and β-diketones. Also known are cobalt-containing catalyst systems. Suitable manganese and cobalt-containing catalyst systems for polyphenylene ether preparation are known in the art by reason of disclosure in numerous patents and publications.

In order that those skilled in the art will be better able to practice the present invention, the following examples are given by way of illustration and not by way of limitation. All parts are by weight. The divinylbenzene used had an activity of 55%, the remainder being a mixture of isomers.

Example 1

A mixture of 22.6 parts of deionized water, 0.12 parts of dodecylbenzene sulfonic acid, and 3.4 parts of an organosilicon monomer mixture based on mixing 84.7 parts of octamethylcyclotetrasiloxane, 9.8 parts tetraethoxysilane, 1.4 parts methacryloxypropyltriethoxysilane and 4.0 parts tetramethyltetravinylcyclotetrasiloxane, 6.2 parts of a mixture of vinyl organic monomers, based on mixing 98.0 parts of styrene and 2.0 parts divinylbenzene was stirred and homogenized by passing a solution of the mixture through a Microfluidics Corp. M-100T homogenizer under a pressure of 7600-8400 psi. While the mixture was continuously stirred, it was heated to 75°C while under a nitrogen subsurface purge. At 75°C the subsurface purge was changed to a blanket of nitrogen to maintain an inert atmosphere. There was then added to the mixture in a batchwise manner, 0.30 part of a 2% aqueous solution of potassium persulfate. There after, 0.30 part aliquots of potassium persulfate were incrementally added after 1,2,3, and 4 hours to provide a total of 1.5 parts of the 2% aqueous potassium persulfate solution. The reaction temperature was maintained at 75°C for 2 hours after the addition of the last persulfate aliquot. The reaction mixture was stirred and allowed to cool under ambient conditions. After 18 hours at 20-30°C, there was added 0.21 part of a mixture containing 10% GAFAC RE610 which is an organo phosphate of the GAF Corporation, Wayne, NJ and 90% deionized water was added. There was obtained a latex at a pH of about 1 having a 27% non-volatile solids. The latex was filtered and added to a stirred magnesium sulfate solution consisting of 66.3 parts of a 1% aqueous magnesium sulfate solution and deionized water to flocculate the latex. The mixture was filtered by a Tolhurst centrifuge and the resulting product was rinsed with copious amounts of deionized water. The product was a white powder which is dried for 3 days in a 60°C vacuum oven. Based on method of preparation the powder consisted of 35% by weight of polymerized organopolysiloxane and 65% by weight of polymerized styrene/divinylbenzene. The latex consisted of a crosslinked polystyrene lobe and crosslinked polysiloxane appended thereto and had a volume average particle size of 132 nm.

The above procedure was repeated except that prior to flocculation and after 20 hours at 20-30°C, 0.46 part of a mixture containing 15% potassium carbonate and 85% deionized water was slowly added to the mixture to neutralize the latex resulting in a pH rise from 1 to a pH of 7.5. There was obtained a latex having a 27% non-volatile solids. The latex had a volume average particle size of 134 nm and a crosslinked polystyrene lobe and crosslinked polysiloxane appended thereto.

The initial procedure was repeated except that the mixture of organosilicon monomer and vinyl containing organic monomer was not homogenized. There was obtained a latex at a pH of about 1 having a 27% non-volatile solids. The latex had a volume average particle size of 61 nm and a crosslinked polystyrene lobe and crosslinked polysiloxane appended thereto.

The above procedure was repeated except that prior to flocculation and after 20 hours at 20-30°C, 0.46 part of a mixture containing 15% potassium carbonate and 85% deionized water was slowly added to the mixture to neutralize the latex resulting in a pH rise from 1 to a pH of 7.5. There was obtained a latex having a 27% non-volatile solids. The latex had a volume average particle size of 61 nm and a crosslinked polystyrene lobe and crosslinked polysiloxane appended thereto.

The above organopolysiloxane-organic polymeric impact modifiers (pH 1 and pH 7.5, homogenized and not homogenized) were each dry blended with powdered polyphenylene ether, (PPE, 0.46 I.V.) to form a dry blend of 15 weight % of impact modifier and 85 weight % of polyphenylene ether. The dry blends were tumble mixed on a jar shaker to give homogeneous dispersion. The blends were then extruded on a Welding Engineer twin screw extruder. The extrudates were pelletized, dried and injection molded into test specimens on a 77 ton Battenfeld molding machine. The specimens were tested for gloss and various physical properties. The following results were obtained where "SX" is siloxane and "STY" is styrene, and PPE is polyphenylene ether:

TABLE 1

| SX/STY Ratio | 35/65 | 35/65 | 35/65 | 35/65 | Control |
|---|---|---|---|---|---|
| Avg. Particle Size (nm) | 132 | 132 | 61 | 61 | |
| % PPE | 85 | 85 | 85 | 85 | 100 |
| % Impact Modifier | 15 | 15 | 15 | 15 | 0 |
| Impact Modifier Latex pH | 1 | 7.5 | 1 | 7.5 | -- |
| 60 Degree Gloss | 64 | 95 | 87 | 95 | 110 |
| Notched Izod | | | | | |
| 25°C, 10 mil, ft-lb/in | 8 | 7 | 2.4 | 1.5 | 0.6 |
| Dynatup | | | | | |
| 25°C, 10 mil, ft-lb | | | | | |
| Total Energy | 47 | 47 | -- | -- | -- |
| Energy Max. Load | 45 | 45 | -- | -- | -- |
| Molding Conditions | | | | | |
| Average Barrel Set (°F) | 600 | 600 | 600 | 600 | 600 |
| Mold surface Temp. (°F) | 190 | 190 | 185 | 190 | 190 |

The above results show that significantly improved gloss was obtained when the pH of the mixture was raised from 1 to 7.5 and that the degree of increase in specular gloss is also related to the particle size of the latex.

Example 2

The initial procedure of Example 1 was repeated except that the latex having 26% by weight of non-volatile solids was obtained by reacting 4.1 parts of an organosilicon monomer mixture based on mixing 84.7 parts of octamethylcyclotetrasiloxane, 9.8 parts tetraethoxysilane, 1.4 parts methacryloxypropyltriethoxysilane, and 4.0 parts of tetramethyltetravinylcyclotetrasiloxane with 5.5 parts of a mixture of vinyl organic monomers, based on mixing 98.0 parts of styrene and 2.0 parts of divinylbenzene. The resulting latex had a volume average particle size of approximately 225 nm with a crosslinked polystyrene lobe and crosslinked polysiloxane appended thereto. The particles consisted of 42.5% by weight of polymerized organopolysiloxane and 57.5% by weight of polymerized styrene/divinylbenzene.

The above procedure was repeated, except that after 20 hours stirring at 20-30°C and prior to flocculation of the latex, there was added 0.30 part of a mixture containing 15% by weight of potassium carbonate and 85% by weight of deionized water to the aqueous emulsified mixture to neutralize the pH of the mixture from pH 1 to pH 3. There was obtained a latex having a 26% by weight of non-volatile solids. The latex had a volume average particle size of about 225 nm with a crosslinked polystyrene lobe and crosslinked polysiloxane appended thereto.

The initial procedure was repeated, except that after 20 hours stirring the emulsified reaction mixture at 20-30°C and prior to flocculation, there was added approximately 0.4 part of the mixture containing 15 weight % of potassium carbonate and 85 weight % of deionized water to neutralize the latex from pH 1 to pH 6. The procedure yielded a latex having a % non-volatile solids of 26%. The latex had a volume average particle size of about 225 nm with a crosslinked polystyrene lobe and a crosslinked polysiloxane appended thereto.

The initial procedure was repeated, except that after 20 hours at 20-30°C, there was added to the aqueous emulsified reaction mixture, 0.46 part of a mixture containing 15% potassium carbonate and 85% deionized water to produce a latex which was initially pH 1 to a pH of 7.5. The latex had about the same non-volatile solids and average particle size of about 225 nm.

In accordance with the procedure of Example 1, a series of blends of polyphenylene ether and impact modifiers (pH 1, pH 3, pH 6, and pH 7.5), preformed by dry blending with about 10 parts of the impact modifier to 90 parts by weight of powdered polyphenylene ether were then melt extruded molded as in Example 2.

The morphology of the impact modified polyphenylene ether blends was determined using transmission electron microscopy (Hitachi H-600 TEM, operating voltage 100 KV). Surface profiles were also characterized using a Sloane DecTac profilimeter interfaced with a MacIntosh computer. Three parallel traces were run on each sample in the same areas as the gloss readings, taking care to avoid previous stylus traces. The DecTac was run at a traverse rate of 1 mm/min and digitized surface heights were recorded every 3.33μm. Root mean square amplitude (σ) values were calculated by fitting a least squares line to segments of various length and summing the deviations of the individual data points from this line according to the formula,

$$\sigma = \sqrt{\Sigma(x - x_{ave})^2/(n - 1)}$$

where $x_{ave}$ is the least squares average amplitude and n is the number of data points in the segment. The values were subsequently averaged over the appropriate number of segments in each set of sample traces. Gloss and surface roughness were summarized as shown in Table 2, showing the effect of the pH of the impact modifier:

TABLE 2

| SX/STY | 42.5/57.5--------------> | | | |
|---|---|---|---|---|
| % PPE | 90 | 90 | 90 | 90 |
| % Impact Modifier | 10 | 10 | 10 | 10 |
| Impact Modifier Latex pH | 1 | 3 | 6 | 7.5 |
| 20 Degree Gloss | 20 | 33 | 62 | 82 |
| 60 Degree Gloss | 70 | 79 | 90 | 97 |
| 85 Degree Gloss | 94 | 97 | 97 | 99 |
| Surface Roughness | | | | |
| rms Amplitude (μ) | 0.074 | 0.052 | 0.033 | 0.017 |
| Molding Conditions | | | | |
| Average Barrel Set (°F) | 590 | 590 | 590 | 590 |
| Mold Surface Temp. (°F) | 220 | 220 | 220 | 220 |

Additional dry blends were prepared from some of the impact modifiers pH 1, pH 3 and pH 7.5 with powdered polyphenylene ether which were then extruded and molded as previously described. Various physical properties were measured as shown in Table 3, showing the effect of impact modifier pH above and beyond the effect of mold surface temperature.

TABLE 3

| SX/STY | 42.5/57.5---------------------------------> | | | | | |
|---|---|---|---|---|---|---|
| % PPE | 90 | 90 | 90 | 90 | 90 | 90 |
| % Impact Modifier | 10 | 10 | 10 | 10 | 10 | 10 |
| Impact Modifier Latex pH | 1 | 1 | 3 | 3 | 7.5 | 7.5 |
| 60 Degree Gloss | 66 | 78 | 80 | 82 | 91 | 94 |
| Notched Izod 25°C, 10 mil, ft-lb/in | 4 | 4 | 5 | 5 | 5 | 5 |
| Dynatup 25°C, 10 mil, ft-lb | | | | | | |
| Total Energy | 34 | 35 | 34 | 33 | 36 | 37 |
| Energy Max. Load | 27 | 30 | 28 | 28 | 29 | 33 |
| Molding Conditions | | | | | | |
| Average Barrel Set (°F) | 600 | 600 | 600 | 600 | 600 | 600 |
| Mold Surface Temp. (°F) | 180 | 225 | 180 | 225 | 180 | 225 |

Example 3

The procedure of Example 1 was repeated, except that a mixture was polymerized consisting of 3.4 parts of an organosilicon monomer mixture based on mixing 78.3 parts of octamethylcyclotetrasiloxane, 19.8 parts tetraethoxysilane, and 1.9 parts tetramethyltetravinylcyclotetrasiloxane together with 6.2 parts of a mixture of vinyl organic monomers based on mixing 98.0 parts of styrene and 2.0 parts of divinylbenzene. The temperature of the mixture is raised to 85°C while under a nitrogen subsurface purge. At 85°C, the subsurface purge was changed to a blanket of nitrogen to maintain an inert atmosphere. There was then added to the mixture, 0.50 part of a 2% aqueous solution of potassium persulfate and incrementally charged after 1 to 2 hours with aliquots of 0.50 part, for a total of 1.5 part of a 2% aqueous solution. The reaction temperature was maintained at 85°C for 1 hour after the addition of the last persulfate aliquot. The reaction mixture was stirred and allowed to cool to 40°C under ambient conditions. After 5.5 hours at 40°C, the reaction mixture was allowed to cool to ambient temperature. No GAFAC RE610 solution was added to the reactor. There was obtained a latex having a 26% non-volatile solids. There was obtained a latex having a volume average particle size of about 200 nm with a crosslinked polystyrene lobe and crosslinked polysiloxane appended thereto.

The above procedure was repeated, except that after 5.5 hours at 40°C, 0.46 part of a mixture containing 15% potassium carbonate and 85% deionized water was slowly added to the neutralized latex from a pH 1 to a pH 7.5. The resulting latex had approximately the same non-volatile solids and average particle size.

The initial procedure was repeated, except that an organosilicon monomer mixture was used based on mixing 78.3 parts octamethylcyclotetrasiloxane, 19.8 parts tetrethoxysilane, and 1.9 parts tetramethyltetravinylcyclotetrasiloxane. There was also charged 3.4 parts of a mixture of vinyl organic monomers, based on mixing 98.0 parts of styrene and 2.0 parts divinylbenzene. There was obtained a latex having a 24% non-volatile solids. The latex had a volume average particle size of about 250 nm with a crosslinked polystyrene lobe and crosslinked polysiloxane appended thereto. The particles consisted of 65% by weight of polymerized organopolysiloxane and 35% by weight of polymerized styrene/divinylbenzene.

The initial procedure was repeated, except that after 5.5 hours at 40°C, 0.46 part of the mixture containing 15% potassium carbonate and 85% deionized water was slowly added to the mixture to neutralize the pH of the latex from pH 1 to pH 7.5. The procedure provided a latex having about the same weight % of non-volatile solids and average particle size as previously shown.

The initial procedure was repeated, except that after 5.5 hours at 40°C, approximately 0.8 part of a mixture containing 15% potassium carbonate and 85% deionized water was slowly added to the aqueous emulsified mixture to neutralize the pH of the latex from pH 1 to 10. The procedure yielded a latex having about the same weight % of non-volatile solids and volume average particle size as previously shown.

The above organopolysiloxane based impact modifiers had a 35/65% silicon to styrene ratio and 65/35% silicone to styrene ratio. The latex neutralized at from a pH 1 to pH 7.5 and pH 1 to 7.5 and 10 respectively,

where isolated and then dry blended with powdered polyphenylene ether in accordance with the procedure of Example 1. The resulting blends were then extruded and molded as previously described. The various physical properties and the effect of the silicon to styrene ratio and pH of the neutralized latex on glass are shown below in Table 4.

TABLE 4

| SX/STY Ratio | 35/65 | 35/65 | 65/35 | 65/35 | 65/35 | Control |
|---|---|---|---|---|---|---|
| % PPE | 85 | 85 | 85 | 85 | 85 | 100 |
| % Impact Modifier | 15 | 15 | 15 | 15 | 15 | 0 |
| Impact Modifier Latex pH | 1 | 7.5 | 1 | 7.5 | 10 | -- |
| 60 Degree Gloss | 81 | 89 | 43 | 77 | 75 | 110 |
| Notched Izod | | | | | | |
| 25°C, 10 mil, ft-lb/in | 5 | 5 | 7 | 8 | 9 | 0.6 |
| Dynatup | | | | | | |
| 25°C, 10 mil, ft-lb | | | | | | |
| Total Energy | 40 | 42 | 40 | 34 | 36 | 12 |
| Energy Max. Load | 38 | 39 | 39 | 32 | 33 | 11 |
| Molding Conditions | | | | | | |
| Average Barrel Set (°F) | 600 | 600 | 600 | 600 | 600 | 600 |
| Mold Surface Temp. (°F) | 170 | 170 | 170 | 170 | 170 | 170 |

Although the above examples are directed to only a few of the very many variables to which the present invention is directed, it should be understood that there is included within the method of the present invention, the formation of a much broader variety of impact modifiers and blends as set forth in the description preceding these examples.

## Claims

1. A method for controlling the specular surface gloss of molded blends of polyphenylene ether and siloxane/organic impact modifier which comprises,
   (1) forming a latex from the substantially concurrent polymerization of 43 to 400 parts by weight of organo silicon monomer, per 150 parts by weight of vinyl containing organic monomer in an aqueous emulsified mixture of such monomer,
   (2) neutralizing the latex of (1) prior to its isolation from the latex mixture of (1) over a pH range of 1 to 10,
   (3) isolating the latex of (2) to provide an organopolysiloxane/organic polymeric material,
   (4) melt blending the organopolysiloxane/organic polymeric material of (3) with polyphenylene ether,
   (5) molding the blend of (4) to provide molded parts having a 60 degree surface gloss of from about 20 to 85 when the pH range of (2) is between 1 to 5 and a 60 degree surface gloss of from about 60

to 100 when the pH is in the range of 5 to 10.

2. A method in accordance with claim 1, where (1) there is utilized 150 to 400 parts by weight of organosilicon monomer to form the latex, (2) molding the blend to provide molded parts having a 60 degree surface gloss of from about 20 to 65 when the pH range is between 1 to 5 and a 60 degree surface gloss of from about 60 to 85 when the pH range is between 5 to 10.

3. A method in accordance with claim 1, where (1) there is utilized 43 to 150 parts by weight of organosilicon monomer to form the latex, (2) molding the blend to provide molded parts having a 60 degree surface gloss of from about 50 to 85 when the pH range is between 1 to 5 and a 60 degree surface gloss of from about 80 to 100 when the pH range is between 5 to 10.

4. A method in accordance with any preceding claim, where the organosilicon monomer used in making the organopolysiloxane/organic polymeric impact modifier is a member selected from the class consisting of octamethylcyclotetrasiloxane, tetraethoxysilane, tetramethyltetravinylcyclotetrasiloxane, methacryloxypropyltriethoxysilane, tetramethoxysilane, tetraethoxysilane, tetraisopropoxysilane and a mixture thereof.

5. A method in accordance with any preceding claim, where the vinyl containing organic monomer used in making the organopolysiloxane/organic polymeric impact modifier is a member selected from the class consisting of alkenyl aromatic, methacrylate, vinyl cyanide and a mixture thereof.

6. A method in accordance with any preceding claim, where the polyphenylene ether melt blended with the organopolysiloxane/organic impact modifier is an oxidative coupled reaction product of 2,6-xylenol.

7. A method in accordance with any preceding claim, where there is utilized in making the extruded melt blend, from 1 to 35 parts by weight of impact modifier, per 100 parts by weight of polyphenylene ether.

8. A method in accordance with claim 7, where there is used 8 to 15 parts by weight of impact modifier made by the method of claim 2, per 100 parts by weight of polyphenylene ether.

European Patent Office

# EUROPEAN SEARCH REPORT

Application Number

EP 92 31 0959

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 369 200 (GENERAL ELECTRIC CO.)<br>* claims 1,45; examples 1,2 *<br>* page 11, line 55 - page 12, line 4 *<br>--- | 1-8 | C08L71/12<br>C08L83/04<br>C08L83/10 |
| X | EP-A-0 369 199 (GENERAL ELECTRIC CO.)<br>* example 1 *<br>*Procedure A*<br>--- | 1-8 | |
| P,X | EP-A-0 485 771 (GENERAL ELECTRIC)<br>*Whole Document*<br>--- | 1-8 | |
| A | EP-A-0 325 875 (NORSOLAR)<br>* claim 1 *<br>----- | 1 | |
| | | | TECHNICAL FIELDS SEARCHED (Int. Cl.5 ) |
| | | | C08L |

The present search report has been drawn up for all claims

| Place of search | Date of completion of the search | Examiner |
|---|---|---|
| THE HAGUE | 07 APRIL 1993 | O'SULLIVAN T.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)